# EUROPEAN PATENT SPECIFICATION

(11) **EP 1 198 668 B1**
(45) Date of publication and mention of the grant of the patent: **17.08.2005**
(21) Application number: 00948140.9
(22) Date of filing: 26.07.2000
(51) Int. Cl.: F02K 9/74, F02K 9/68

(54) **HYDROGEN PEROXIDE BASED PROPULSION SYSTEM**
WASSERSTOFFPEROXIDANTRIEBSSYSTEM
SYSTEME DE PROPULSION A BASE DE PEROXYDE D'HYDROGENE

(30) Priority: 26.07.1999 GB 9917404
(43) Date of publication of application: 24.04.2002
(73) Proprietor: QinetiQ Limited, London, SW1 6TD (GB)
(72) Inventor: TILSTON, John, Ronald, DERA Pyestock, Hampshire GU14 0LX (GB); CHEUNG, Wai, San, DERA Pyestock, Hampshire GU14 0LX (GB)
(74) Representative: Lowther, Deborah
(86) International application number: PCT/GB2000/002837
(87) International publication number: WO 2001/007773

(56) References cited:
- US-A- 3 898 794
- US-A- 4 135 361
- US-A- 5 477 672
- US-A- 5 932 940
- US-A- 6 082 671

## Description

The invention relates to hydrogen peroxide (H₂O₂) engines and in particular to a novel hybrid rocket/turbine hydrogen peroxide based engine and hydrogen peroxide based propulsion system for micro air vehicle propulsion.

Micro air vehicles (MAVs) play a key role in military and surveillance operations. For these MAVs, a range of engine characteristics is needed to meet specific requirements, such as low speed, low noise, high speed, etc. In this specification MAVs are defined as air vehicles which have a wingspan of 1 metre or less and/or a weight of 2kg or less. Features such as weight, ease of starting, reliability, etc. are important in the choice of the power plant. Air breathing engines or motors are usually attractive on weight grounds because they do not have to carry their own oxidant. However this may not be so important at small scales when the mass of the engine itself is relatively high. In addition, of course, small engines have relatively poor thermal and propulsive efficiency due to low cycle temperatures.

Hydrogen peroxide engines are known. The inventors have determined that these engines can be built small enough and give adequate performance requirements for use in MAVs. Hydrogen peroxide can nowadays be generated 'in the field' by electrolytic techniques. It can be decomposed catalytically to produce steam and oxygen at high temperature and is an acceptable propellant in its own right with a high specific thrust and a low infrared (IR) signature. WO 98/02643 discloses a micro rocket in which hydrogen peroxide is used as a monopropellant and decomposed to produce thrust. US 5477672 discloses a macro scale gas generation apparatus in which a hydrocarbon fuel is reacted with a combustion gas created by the decomposition of hydrogen peroxide to create a high-temperature, high-pressure gas which is ejected through a nozzle to drive a turbine. US 3898794 discloses a macro scale power plant in which hydrogen peroxide is decomposed and the resultant mixture of water vapour and oxygen is brought into contact with a hydrocarbon fuel causing combustion, the gases thus produced passing through a venturi portion and impinging upon the blades of a turbine wheel for driving a vehicle, ship or industrial equipment such as an electrical generator.

The invention comprises a thrust-producing engine for a micro air vehicle comprising a tank containing hydrogen peroxide connected to a region adapted to decompose such hydrogen peroxide, and a nozzle; characterised by means to provide a hydrocarbon fuel adapted to burn by consuming oxygen from said decomposition of hydrogen peroxide, whereby in use products of said decomposition and combustion exit through said nozzle; and a duct surrounding said nozzle through which, in use, air is caused to flow in consequence of the flow of products exited through said nozzle.

The invention also resides in a micro air vehicle comprising an engine as defined above for propulsion thereof and in a method of propelling a micro air vehicle comprising decomposing hydrogen peroxide and exiting at least a product thereof through a nozzle to produce thrust; characterised by burning a hydrocarbon fuel with oxygen produced from said decomposition of hydrogen peroxide, and exiting products of such decomposition and combustion through said nozzle; and causing air to flow through a duct surrounding said nozzle in consequence of the flow of products exited through said nozzle.

The invention will now be described by way of example only and with reference to the following figures of which:

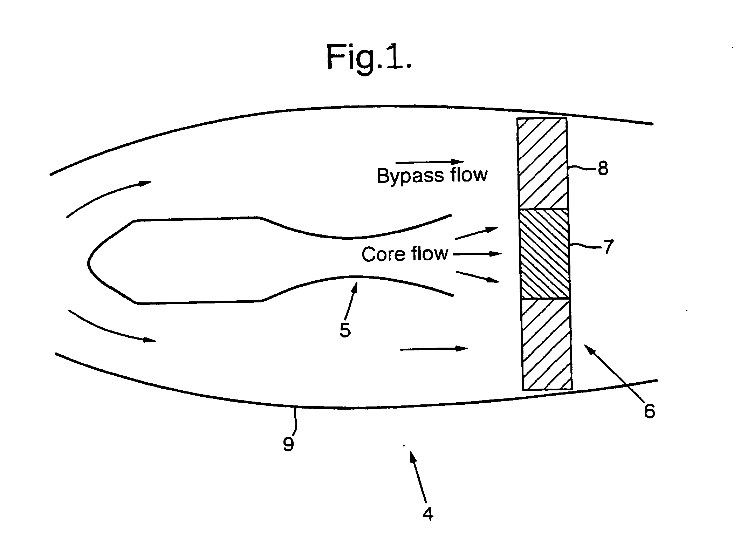

Figure 1 shows an embodiment of the invention comprising a decomposition and combustion chamber/nozzle and a ducted fan.

In one embodiment of the invention, a MAV power plant includes a fuel tank containing 34g of H₂O₂. To hold this weight of fuel, the fuel tank can be a simple cylinder (2cm in diameter and 7.5cm in length). The fuel tank alone will weigh about 16g if it is made of aluminium and its thickness (1mm) should be sufficient to contain the pressure inside the tank. The fuel tank is connected to a decomposition and combustion chamber/nozzle of weight less than 2g.

The decomposition of H₂O₂ is an exothermic process in which a substantial rise in temperature occurs. Thermodynamic calculations on a 90% H₂O₂ solution show that a temperature of 1022K (749°C) and a pressure of 35.5bar (515psi) are achievable when the decomposition products are allowed to expand adiabatically to atmospheric pressure.

A simple convergent/divergent nozzle is used in the flow parameter calculations necessary to diminish the combustion chamber pressure and nozzle exit area. A chamber pressure of 2.07bar (30psi) and a nozzle exit diameter of about 2mm will produce a mass flow through the nozzle of about 0.17g/s and an nozzle exit velocity of M 1.1. The thrust produced now is about 0.124N which is comparable to the amount required to propel an MAV.

In accordance with the invention, a bipropellant system uses hydrocarbon fuel to consume the excess oxygen. This system uses an additional tank to store the hydrocarbon. This has a clear advantage in endurance over a monopropellant system. However, the gain in endurance must weigh against the increase in combustion temperature and complexity in the fuel system. At temperatures in excess of 2400K, very few materials will be suitable for making the combustion chamber. Also, very efficient cooling techniques must be implemented to avoid damage to the combustion chamber. Preferably the propulsion system utilises hydrogen peroxide and kerosene as fuel and oxygen as the oxidant. A bipropellant (H₂O₂ and kerosene) propulsion system has a 70% improvement on flight endurance but has high exhaust temperature (circa 2700K) which makes the design and selection of material for the combustion chamber/nozzle very challenging. A bipropellant system with on-board oxygen gives the best flight endurance.

In the most preferred embodiment the system comprises a bipropellant system as described above with the addition of a ducted fan. Such an arrangement is not known per se. Figure 1 is a figure showing the arrangement 4 of a hydrogen peroxide based ducted fan engine comprising a decomposition and combustion chamber/nozzle arrangement 5, and a turbofan 6 comprising turbine 7 and fan 8 arranged within a duct 9. In the ducted fan engine design, air passes around the outside of the decomposition and combustion chamber/nozzle. The front of the decomposition and combustion chamber has to be shaped to avoid flow separation. The chamber/nozzle 5 will attain very high temperatures during operation and the bypass flow will help to cool the nozzle. For a bypass ratio of 10, the duct exit flow velocity is found to be about 300m/s and the duct exit is 3mm in diameter. The fan rotational speed is estimated to be 1.63E6rpm. This is due to the small size of the fan. These calculations are based on a nozzle throat area of 1mm diameter. The total thrust produced by this engine is 0.634N. A hydrocarbon based fuel is also burnt within the decomposition and combustion chamber, in the region of the nozzle, at least in part using oxygen produced by the decomposition of hydrogen peroxide.

## Claims

1. A thrust-producing engine for a micro air vehicle comprising a tank containing hydrogen peroxide connected to a region (5) adapted to decompose such hydrogen peroxide, and a nozzle (5); **characterised by** means to provide a hydrocarbon fuel adapted to burn by consuming oxygen from said decomposition of hydrogen peroxide, whereby in use products of said decomposition and combustion exit through said nozzle (5); and a duct (9) surrounding said nozzle (5) through which, in use, air is caused to flow in consequence of the flow of products exited through said nozzle (5).

2. An engine according to claim 1 comprising a turbine (7) adapted to be driven by products exited through said nozzle (5).

3. An engine according to claim 2 comprising a fan (8) adapted to be driven by said turbine (7).

4. An engine according to claim 3 wherein said fan (8) is located within said duct (9).

5. A micro air vehicle comprising an engine according to any preceding claim for propulsion thereof.

6. A method of propelling a micro air vehicle comprising decomposing hydrogen peroxide and exiting at least a product thereof through a nozzle (5)to produce thrust; **characterised by** burning a hydrocarbon fuel with oxygen produced from said decomposition of hydrogen peroxide, and exiting products of such decomposition and combustion through said nozzle (5); and causing air to flow through a duct (9) surrounding said nozzle (5) in consequence of the flow of products exited through said nozzle (5).

7. A method according to claim 6 wherein said products are exited towards a turbine (7).

8. A method according to claim 7 wherein said turbine drives a fan (8).

9. A method according to claim 8 wherein air flows towards said fan (8) through said duct (9).

## Patentansprüche

1. Schub erzeugender Antrieb für ein Mikroluftfahrzeug, der einen Wasserstoffperoxid enthaltenden Tank, der an einen Bereich (5) angeschlossen ist, welcher geeignet ist, dieses Wasserstoffperoxid zu zersetzen, und eine Düse (5) umfasst, **gekennzeichnet durch** Mittel, um einen Kohlenwasserstofftreibstoff bereitzustellen, der geeignet ist, **durch** den Verbrauch von Sauerstoff aus der Zersetzung des Wasserstoffperoxids zu verbrennen, wodurch im Betrieb die Produkte des Zersetzungsvorgangs und des Verbrennungsvorgangs **durch** die Düse (5) austreten, und einen Kanal (9), der diese Düse (5) umgibt und **durch** welchen bei Betrieb Luft gezwungen wird, als Folge des Stroms von diese Düse (5) verlassenden Produkten zu strömen.

2. Antrieb nach Anspruch 1, der eine Turbine (7) umfasst, die geeignet ist, von den aus der Düse (5) austretenden Produkten angetrieben zu werden.

3. Antrieb nach Anspruch 2, der ein Gebläse (8) umfasst, das geeignet ist, von der Turbine (7) angetrieben zu werden.

4. Antrieb nach Anspruch 3, wobei sich das Gebläse (8) in dem Kanal (9) befindet.

5. Mikroluftfahrzeug, das für seinen Vortrieb einen Antrieb nach einem der vorhergehenden Ansprüche aufweist.

6. Verfahren zum Antrieb eines Mikroluftfahrzeugs, welches das Zersetzen von Wasserstoffperoxid und Ausströmen mindestens eines Produktes davon durch eine Düse (5), um Schub zu erzeugen, umfasst, **dadurch gekennzeichnet, dass** ein Kohlenwasserstofftreibstoff mit Sauerstoff verbrannt wird, der durch die Zersetzung des Wasserstoffperoxids entsteht, und Produkte des Zersetzungsvorgangs und des Verbrennungsvorgangs aus der Düse (5) ausströmen und Luft zwingen, durch einen die Düse (5) umgebenden Kanal (9) als Folge des die Düse (5) verlassenden Produktstroms zu strömen.

7. Verfahren nach Anspruch 6, wobei die Produkte zu einer Turbine (7) strömen.

8. Verfahren nach Anspruch 7, wobei die Turbine ein Gebläse (8) antreibt.

9. Verfahren nach Anspruch 8, wobei die Luft durch den Kanal (9) zu dem Gebläse (8) strömt.

## Revendications

1. Moteur produisant une poussée pour un micro-drone comprenant un réservoir contenant du peroxyde d'hydrogène connecté à une zone (5) appropriée pour décomposer ledit peroxyde d'hydrogène, et une tuyère (5) ; **caractérisé par** un moyen pour amener un hydrocarbure approprié pour brûler en consumant l'oxygène de ladite décomposition du peroxyde d'hydrogène, ce par quoi, à l'utilisation, les produits desdites décomposition et combustion sortent par ladite tuyère (5) ; et un conduit (9) entourant ladite tuyère (5) à travers lequel, à l'utilisation, l'air est poussé en conséquence du courant de produits sortis par ladite tuyère (5).

2. Moteur selon la revendication 1 comprenant une turbine (7) appropriée pour être entraînée par les produits sortis par ladite tuyère (5).

3. Moteur selon la revendication 2 comprenant une soufflante (8) appropriée pour être entraînée par ladite turbine (7).

4. Moteur selon la revendication 3 dans lequel ladite soufflante (8) est disposée dans ledit conduit (9).

5. Micro-drone comprenant un moteur selon l'une quelconque des revendications précédentes pour la propulsion de celui-ci.

6. Procédé de propulsion d'un micro-drone comprenant de décomposer du peroxyde d'hydrogène et de faire sortir au moins un produit de celui-ci par une tuyère (5) pour produire une poussée ; **caractérisé par** la combustion d'un hydrocarbure avec l'oxygène produit par ladite décomposition du peroxyde d'hydrogène, et la sortie des produits desdites décomposition et combustion par ladite tuyère (5) ; et par le passage forcé de l'air par un conduit (9) entourant ladite tuyère (5) en conséquence du courant de produits sortis par ladite tuyère (5).

7. Procédé selon la revendication 6 dans lequel lesdits produits sont sortis vers une turbine (7).

8. Procédé selon la revendication 7 dans lequel ladite turbine entraîne une soufflante (8).

9. Procédé selon la revendication 8 dans lequel l'air s'écoule vers ladite soufflante (8) par ledit conduit (9).
